# FASCICULE DE BREVET EUROPEEN

(11) **EP 3 126 158 B1**
(45) Date de publication et mention de la délivrance du brevet: **20.11.2019**
(21) Numéro de dépôt: 15741857.5
(22) Date de dépôt: 27.03.2015
(51) Int. Cl.: B60C 11/13, B60C 11/12, B60C 11/03, B60C 11/24

(54) **BANDE DE ROULEMENT AYANT DES CANAUX SUR SES BORDS**
REIFENPROFIL MIT KANÄLEN AN DEN RÄNDERN
TREAD WITH CHANNELS ON THE EDGES OF SAME

(30) Priorité: 31.03.2014 FR 1452815
(43) Date de publication de la demande: 08.02.2017
(73) Titulaire: Compagnie Générale des Etablissements Michelin, 63000 Clermont-Ferrand (FR)
(72) Inventeur: DURAND-GASSELIN, Benoit, 63040 Clermont-Ferrand Cedex 9 (FR); BONNAMOUR, Matthieu, 63040 Clermont-Ferrand Cedex 9 (FR)
(74) Mandataire: Diernaz, Christian
(86) Numéro de dépôt international: PCT/EP2015/056782
(87) Numéro de publication internationale: WO 2015/150282

(56) Documents cités:
- WO-A1-2012/058171
- US-A- 3 848 651

## Description

### DOMAINE DE L'INVENTION

La présente invention concerne une bande de roulement pour pneu comprenant plusieurs couches d'usure, certaines de ces couches d'usure formant de nouvelles rainures s'ouvrant sur la surface de roulement de la bande.

### ÉTAT DE LA TECHNIQUE

Une bande de roulement d'un pneu s'étend circonférentiellement autour du pneu et joue le rôle d'intermédiaire entre la structure du pneu et la surface ou chaussée sur laquelle roule le pneu. Le contact entre la bande de roulement et la chaussée se fait dans une empreinte de contact. Une bande de roulement comprend une sculpture formée d'une pluralité d'éléments de relief - nervure et/ou blocs - séparés les uns des autres par des rainures et/ou des incisions. Ces rainures et incisions forment sur la surface de roulement des arêtes utiles à l'obtention de performances d'adhérence que ce soit en motricité, freinage et tenue de route en virage.

Un problème auquel doit faire face l'homme du métier réside dans la conservation des performances du pneu avec l'usure de sa bande de roulement.

On connaît le document WO2012/058171 publié en 2012 dans lequel est divulguée une sculpture de bande de roulement comprenant plusieurs couches d'usure avec pour chaque couche d'usure un taux de creux volumique spécifique et approprié pour chaque couche d'usure. En effet, si l'on dispose d'un trop grand taux de creux à l'état neuf, il est certes possible d'avoir un taux de creux après une usure partielle, mais il y a alors une perte de rigidité à l'état neuf qui peut être préjudiciable sur le plan d'autres performances.

Par ailleurs, une bande de roulement de pneu d'un véhicule tourisme a un profil externe qui n'est pas cylindrique autour de l'axe de rotation du pneu pourvu de cette bande. Ce profil vu dans un plan contenant l'axe de rotation est curviligne et a des courbures plus prononcées dans les régions des bords axialement externes de la bande. Dans ces régions et du fait de ce profil transversal, tout se passe comme si l'épaisseur à user de la bande était réduite. Le document WO2012/058171 cité ne traite pas de ce problème : en effet, avec l'usure de la bande de roulement le volume disponible pour l'écoulement de l'eau lors de roulage par temps de pluie est réduit et cela d'autant que l'on se rapproche des régions axialement à l'extérieur de la bande de roulement.

Il est en outre fait référence au document US 3848651 A montrant une bande de roulement comprenant des puits dont une extrémité s'ouvre sur un bord de la bande.

Il y a donc un besoin de créer une bande de roulement de pneu destiné à équiper un véhicule de tourisme qui permet tout à la fois d'assurer une pérennité des performances avec l'usure tout en résolvant le problème décrit précédemment.

### Définitions :

Le taux de creux d'une sculpture est égal au rapport entre la surface des creux (rainures) délimités par les blocs et la surface totale (surface de contact des blocs et surface des creux). Un taux de creux faible indique une grande surface de contact des blocs et une faible surface de creux entre les blocs.

Le taux de creux surfacique d'une sculpture est égal au rapport entre la surface des creux (essentiellement formés par des rainures) délimités par les éléments de relief (blocs, nervures) et la surface totale (surface de contact des éléments de relief et surface des creux). Un taux de creux faible indique une grande surface de contact de la bande de roulement et une faible surface de creux entre les éléments de relief.

Le taux de creux volumique d'une sculpture d'une bande de roulement à l'état neuf est égal au rapport entre le volume des creux (formés notamment par des rainures, des cavités) délimités par les éléments de relief (blocs, nervures) et le volume total de la bande de roulement comprenant le volume de matière à user et le volume des creux. Un taux de creux volumique faible indique un faible volume de creux relativement au volume de la bande de roulement. Pour chaque niveau d'usure, on peut également définir un volume de creux.

Plan équatorial : plan perpendiculaire à l'axe de rotation et passant par les points du pneu axialement les plus à l'extérieur, ce plan équatorial divisant virtuellement le pneu en deux moitiés sensiblement égales.

Un bloc est un élément en relief formé sur la bande de roulement qui est délimité par des creux ou rainures et comprenant des parois latérales et une face de contact destinée à venir en contact avec la chaussée. Cette face de contact a un centre géométrique défini comme le barycentre ou centre de gravité de la face.

Une nervure est un élément en relief formé sur une bande de roulement, cet élément s'étendant dans la direction circonférentielle et faisant le tour du pneu. Une nervure comprend deux parois latérales et une face de contact, cette dernière étant destinée à venir en contact avec la chaussée pendant le roulage.

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Par axialement vers l'extérieur, on entend une direction qui est orientée vers l'extérieur de la cavité interne du pneu.

L'épaisseur totale E d'une bande de roulement est mesurée, sur le plan équatorial du pneu pourvu de cette bande, entre la surface de roulement et la partie radialement la plus à l'extérieur de l'armature de sommet à l'état neuf.

Les conditions usuelles de roulage du pneu ou conditions d'utilisation sont celles qui sont définies par la norme E.T.R.T.O. ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

Par indicateur d'usure on entend un dispositif pouvant être moulé avec la bande de roulement qui facilite la lecture de l'usure de cette bande en roulage par l'usager. En général, une bande de roulement comprend plusieurs indicateurs d'usure formés chacun d'un redent de hauteur fixée par la législation et moulé dans les rainures de cette bande.

L'empreinte de contact avec un sol est réalisée avec le pneu en conditions statiques ; à partir de cette empreinte, on calcule une valeur moyenne de longueur d'empreinte dans la direction circonférentielle.

Une découpure désigne de manière générique une ouverture réalisée notamment par moulage et correspond à l'espace délimité par des parois de matière se faisant face et distantes l'une de l'autre d'une distance non nulle (dite "largeur de la découpure"). Une découpure peut être soit une rainure soit une incision ou encore une combinaison d'au moins une rainure et d'au moins une incision. Ce qui différencie une incision d'une rainure c'est précisément la distance séparant les parois de matière se faisant face ; dans le cas d'une incision, cette distance est appropriée pour permettre la mise en contact au moins partielle des parois délimitant ladite incision au moins lors du passage dans le contact avec la chaussée. Dans le cas d'une rainure, les parois délimitant cette rainure ne peuvent venir en contact l'une contre l'autre dans les conditions usuelles de roulage.

### BREF EXPOSÉ DE L'INVENTION

La présente invention vise à améliorer à la fois les performances à l'état neuf et à maintenir ces bonnes performances après usure partielle et cela jusqu'à usure complète.

A cet effet, l'invention a pour objet une bande de roulement pour un pneu, cette bande de roulement comprenant au moins deux rainures d'orientation générale circonférentielle délimitant des parties intermédiaires et des parties de bord, ces parties de bord délimitant axialement la bande de roulement. Ces rainures d'orientation générale circonférentielle sont formées pour être présentes au moins jusqu'à ce que la limite d'usage de la bande soit atteinte. Cette bande de roulement comprend une surface de roulement à l'état neuf, cette surface de roulement ayant un profil transversal externe obtenu comme l'intersection de la surface de roulement avec un plan contenant l'axe de rotation du pneu, ce profil transversal curviligne générant une réduction de l'épaisseur de matière à user sur les régions de bord de la bande de roulement.

Cette bande comprend au moins un indicateur d'usure limite formé dans au moins une rainure circonférentielle pour indiquer la limite d'usage de cette bande en roulage et ainsi permettre à l'usager de remplacer le pneu usé par un nouveau pneu.

Par ailleurs, cette bande comprend sur ses régions de bord une pluralité de découpures d'orientation générale transversale et de profondeur appropriée pour être présentes jusqu'à atteindre l'usure limite de la bande. Chaque découpure d'orientation générale transversale est formée d'une première partie s'ouvrant sur la surface de roulement à l'état neuf, cette première partie ayant une largeur moyenne et étant prolongée vers l'intérieur de la bande par une partie de creux formant un canal de largeur moyenne supérieure à la largeur moyenne de la première partie, ce canal comportant un fond et étant destiné à former une nouvelle rainure transversale après une usure partielle prédéterminée.

Cette bande de roulement est telle que la section de chaque canal, cette section étant prise entre le fond de ce canal et au moins une hauteur égale à la hauteur de l'indicateur d'usure limite, augmente quand on parcourt la découpure en allant axialement de l'intérieur de la bande vers l'extérieur de la bande.

Avantageusement, cette bande de roulement est telle que chaque découpure formée par une première partie prolongée par un canal a une section totale à l'état neuf qui est : soit constante sur toute la longueur de ladite découpure, soit va en augmentant en allant axialement vers l'extérieur de la bande. Par section totale d'une découpure, on entend l'aire de la section transversale de cette découpure prise en différentes positions entre ses extrémités.

Chaque découpure transversale s'ouvre axialement à l'extérieur de la bande de roulement, c'est-à-dire sur une partie latérale de la bande, et peut ou non s'ouvrir dans une rainure circonférentielle.

De façon avantageuse, la profondeur maximale de chaque découpure formée sur les régions de bord est égale à la profondeur maximale des rainures d'orientation générale circonférentielle.

La première partie de chaque découpure transversale formée sur les régions de bord peut être formée par une incision dont les parois la délimitant sont aptes à venir en contact l'une contre l'autre lors du passage dans le contact. Cette première partie peut aussi être une rainure.

Avantageusement, chaque découpure transversale formée sur les régions de bord comprend une partie intermédiaire assurant un raccord progressif entre la première partie de la découpure s'ouvrant sur la surface de roulement à l'état neuf et le canal prolongeant vers l'intérieur cette rainure.

Grâce à cette solution, il est possible, et cela bien que l'épaisseur totale à l'état neuf soit réduite sur les bords de la bande de roulement compte tenu de son profil transversal curviligne, de conserver un niveau satisfaisant de performances de roulage sur chaussée revêtue d'eau lorsque l'usure de la bande atteint la limite légale d'usure.

D'autres caractéristiques et avantages de l'invention ressortent de la description faite ci-après en référence aux dessins annexés qui montrent, à titre d'exemples non limitatifs, des formes de réalisation de l'objet de l'invention.

### BRÈVE DESCRIPTION DES FIGURES

La figure 1 représente une vue en plan partielle d'une surface d'une bande de roulement ;
La figure 2 représente une vue en perspective d'une région de bord de la bande de roulement montrée avec la figure 1;
La figure 3 montre une vue en coupe selon la ligne I-I prise sur la figure 1 ;
La figure 4 montre une vue en coupe selon la ligne II-II prise sur la figure 1.

### DESCRIPTION DES FIGURES

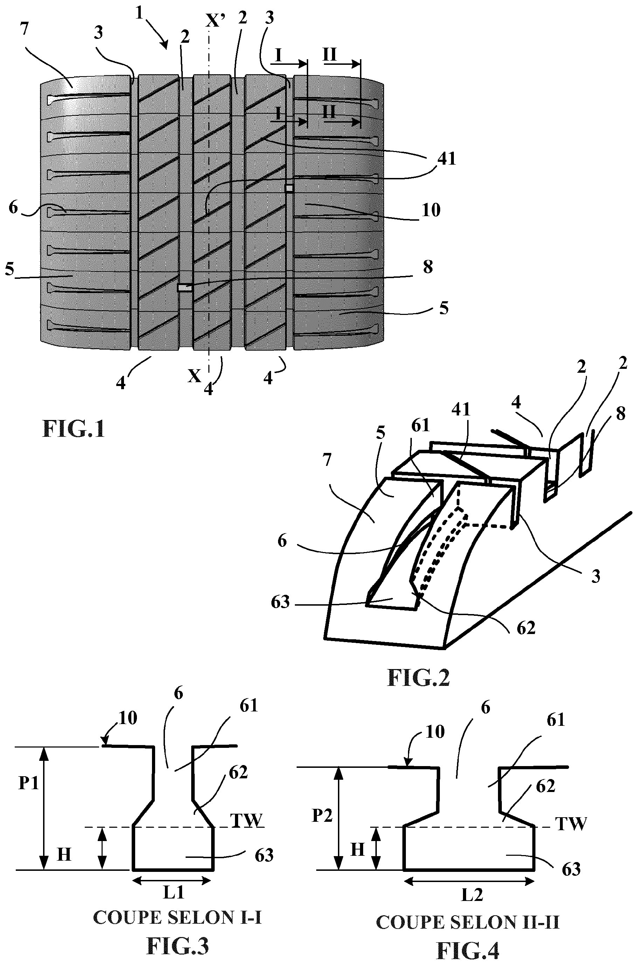

La figure 1 représente une vue en plan partielle d'une surface de roulement 10 d'une bande de roulement 1. Sur cette figure 1, il est représenté partiellement une bande de roulement 1 destinée à équiper un pneu d'un véhicule de tourisme. Cette bande de roulement 1 comprend quatre rainures circonférentielles 2, 3 ayant toutes une même profondeur égale à 8 mm. Des indicateurs d'usure sont moulés sur le fond d'au moins une de ces rainures. La profondeur de ces rainures 2, 3 est telle que, lorsque l'usure de la bande atteint la limite d'usure fixée par les règlements nationaux (les indicateurs d'usure moulés viennent en contact sur la surface de roulement), ces rainures n'ont pas totalement disparu et il existe encore une possibilité de drainage de l'eau éventuellement présente sur une chaussée.

Les deux rainures circonférentielles 2 les plus proches du plan équatorial (indiqué par une ligne XX' sur la figure 1) ont une largeur moyenne égale à 10 mm tandis que les deux autres rainures 3 ont une largeur moyenne égale à 8 mm.

Ces quatre rainures délimitent trois rangées intermédiaires 4 et deux rangées de bord 5 délimitant axialement la bande de roulement 1. Les rangées intermédiaires 4 sont pourvues d'une pluralité d'incisions obliques 41 se fermant lors du passage dans le contact.

Sur cette bande de roulement et plus précisément dans les rainures circonférentielles plusieurs indicateurs 8 de limite d'usure sont moulés tout le tour de la bande afin de permettre à l'usager une lecture aisée du niveau d'usure de ses pneus et de s'assurer que ses pneus n'ont pas atteint le niveau limite d'usure fixé réglementairement. Dans le cas présent, les indicateurs 8 de limite d'usure forment un relief sur le fond des rainures d'une hauteur égale à 1.6 mm. En conséquence, lorsque la surface externe de ces indicateurs 8 arrive en contact avec la chaussée, il reste une profondeur suffisante pour les rainures circonférentielles qui permet d'assurer la sécurité du roulage. À ce moment-là, il devient bien entendu nécessaire pour l'usager de remplacer ce pneu usé par un pneu neuf.

Chaque rangée de bord 5 comprend une pluralité de découpures transversales 6, chaque découpure transversale 6 s'ouvrant sur la surface de roulement 10 et dans une rainure circonférentielle 3. Chaque découpure transversale 6 comprend dans le cas présent une rainure 61 s'ouvrant sur la surface de roulement 10 à l'état neuf, cette rainure 61 étant prolongée par une partie intermédiaire de liaison 62 de largeur variable dans la profondeur de la bande, cette partie intermédiaire de liaison 62 se terminant par un canal 63 dont la largeur est supérieure à la largeur de la rainure 61.

Compte tenu du profil transversal externe de la bande de roulement à l'état neuf (ce profil 7 est visible sur la figure 2 représentant une vue partielle en perspective d'une région de bord 5) et de la structure de renforcement interne d'un pneu, il ressort que l'épaisseur à user en bord de bande de roulement est sensiblement réduite et cela d'autant que l'on s'éloigne axialement du plan médian équatorial. Si on veut préserver les performances de la bande de roulement 1 notamment sur ses régions de bord 5, il est avantageux de construire les découpures transversales 6 dans ces régions selon l'invention, c'est-à-dire en faisant en sorte que la section de chaque canal 63 soit croissante en allant axialement de l'intérieur du pneu vers l'extérieur, notamment en augmentant sa largeur moyenne.

Ainsi après une usure correspondant à la limite d'usure, le volume disponible pour le drainage dans les découpures transversales (réduites aux canaux) n'est pas réduit en allant vers l'extérieur mais au contraire est augmenté dans le cas présent.

La figure 3 montre une vue en coupe selon la ligne I-I prise sur la figure 1. Sur cette figure 3, on voit qu'une découpure transversale 6 est formée d'une rainure 61 de largeur constante égale à 2.5 mm, prolongée vers l'intérieur par un canal 63 de largeur maximale L1 égale à 5.5 mm, la rainure 61 étant reliée au canal 63 par une partie intermédiaire 62 de liaison ayant une largeur variable et appropriée pour relier la rainure 61 au canal 63. La distance entre la surface de roulement 10 à l'état neuf et le fond du canal 63 est notée P1 tandis que la distance entre la surface externe de l'indicateur d'usure limite TW repérée par la ligne en traits pointillés et le fond du canal est notée H.

La section du canal 63 restant au-delà de la limite d'usure représente 9 mm². La section totale de la découpure à l'état neuf est égale à 25 mm².

La figure 4 montre une vue en coupe selon la ligne II-II prise sur la figure 1. La position de cette coupe est située axialement à l'extérieur de la position de la coupe montrée avec la figure 3.

La distance entre la surface de roulement 10 à l'état neuf et le fond du canal 63 dans ce plan de coupe est notée P2 tandis que la distance entre la surface externe de l'indicateur d'usure limite TW repérée par la ligne en traits pointillés et le fond du canal est notée H.

Sur cette figure 4, on voit que dans ce plan de coupe la découpure transversale 6 a une section égale à celle qu'elle avait pour la position correspondant à la coupe montrée avec la figure 3, tandis que la largeur de la rainure 61 s'ouvrant sur la surface de roulement à l'état neuf est augmentée et est égale à 4.5 mm et la largeur L2 du canal 63 restant à partir du niveau limite d'usure TW est augmentée par rapport à la largeur L1 du canal pris sur la figure 3 afin que la section du canal restant à partir du niveau TW dans ce plan de coupe II-II soit supérieure à ce qu'elle est dans le plan de coupe I-I de la figure 3.

Sur ce plan de coupe la section du canal restant à partir du niveau d'usure limite est égale à 12 mm² (la largeur maximale du canal est égale à 7.5 mm).

Dans une variante non montrée ici, la largeur de chaque rainure s'ouvrant sur la surface de roulement à l'état neuf reste constante sur toute la longueur de la découpure transversale, seule variant en augmentant la largeur du canal prolongeant chaque rainure.

Dans une autre variante non représentée, la première partie de la découpure est formée par une incision dont les parois sont aptes à être au moins en partie en contact l'une avec l'autre lors du passage dans le contact. On peut bien entendu pourvoir les parois de cette incision avec des moyens, tels des reliefs, coopérant entre eux pour limiter les déplacements relatifs.

Bien entendu, l'invention n'est pas limitée aux exemples décrits ou représentés et diverses modifications peuvent y être apportées sans sortir du cadre défini par les revendications.

## Revendications

1. Bande de roulement (1) pour un pneu, cette bande de roulement ayant une limite d'usage en usure signalée par au moins un indicateur d'usure (8) et comprenant au moins deux rainures (2, 3) d'orientation générale circonférentielle délimitant des parties intermédiaires (4) et des parties de bord (5), ces parties de bord (5) délimitant axialement la bande de roulement (1), ces rainures d'orientation générale circonférentielle étant formées pour être présentes au moins jusqu'à ce que la limite d'usage de la bande soit atteinte, cette bande de roulement comprenant une surface de roulement (10) à l'état neuf, cette surface de roulement ayant un profil transversal (7) externe obtenu comme l'intersection de la surface de roulement avec un plan contenant l'axe de rotation du pneu, ce profil transversal générant une réduction de l'épaisseur de matière à user sur les parties de bord (5) de la bande de roulement, cette bande de roulement (1) comprenant au moins un indicateur d'usure limite (8) formé dans une rainure circonférentielle (2, 3) pour indiquer la limite d'usage de cette bande en roulage, cette bande comprenant sur ses régions de bord (5) une pluralité de découpures (6) d'orientation générale transversale et s'ouvrant sur une partie latérale de la bande de roulement, chaque découpure transversale ayant une profondeur appropriée pour être présente jusqu'à l'usure limite de la bande, chaque découpure (6) d'orientation générale transversale étant formée d'une première partie (61) s'ouvrant sur la surface de roulement (10) à l'état neuf, cette première partie (61) ayant une largeur moyenne et étant prolongée vers l'intérieur de la bande par une partie de creux formant un canal (63) de largeur moyenne supérieure à la largeur moyenne de la première partie (61), ce canal (63) étant destiné à former une nouvelle rainure transversale après une usure partielle prédéterminée, cette bande de roulement étant **caractérisée en ce que** la section de chaque canal (63), cette section étant prise entre le fond de ce canal (63) et au moins une hauteur égale à la hauteur de l'indicateur d'usure limite (8), augmente quand on parcourt la découpure (6) en allant axialement de l'intérieur de la bande vers l'extérieur de la bande.

2. Bande de roulement (1) pour un pneu selon la revendication 1 **caractérisée en ce que** la découpure (6) formée par une première partie (61) prolongée par un canal (63) a une section totale à l'état neuf qui est constante sur toute la longueur de ladite découpure (6).

3. Bande de roulement pour un pneu selon la revendication 1 **caractérisée en ce que** la découpure (6) formée par une première partie (61) prolongée par un canal (63) a une section totale à l'état neuf qui va en augmentant quand on parcourt la découpure (6) axialement de l'intérieur de la bande vers l'extérieur de la bande.

4. Bande de roulement pour un pneu selon l'une quelconque des revendications 1 à 3 **caractérisée en ce que** la profondeur maximale de chaque découpure (6) formée sur les régions de bord (5) est égale à la profondeur maximale des rainures d'orientation générale circonférentielle (2, 3).

5. Bande de roulement pour un pneu selon l'une quelconque des revendications 1 à 4 **caractérisée en ce que** la première partie (61) de chaque découpure (6) transversale formée sur les régions de bord (5) est formée par une incision dont les parois la délimitant sont aptes à venir en contact l'une contre l'autre lors du passage dans le contact.

6. Bande de roulement pour un pneu selon l'une quelconque des revendications 1 à 5 **caractérisée en ce que** chaque découpure (6) transversale formée sur les régions de bord (5) comprend une partie intermédiaire (62) assurant un raccord progressif entre la première partie (61) s'ouvrant sur la surface de roulement (10) à l'état neuf et le canal (63) prolongeant vers l'intérieur cette première partie (61).

7. Bande de roulement pour un pneu selon l'une quelconque des revendications 1 à 6 **caractérisée en ce que** les découpures (6) transversales formées sur les régions de bord (5) s'ouvrent dans une rainure circonférentielle (2, 3).

## Patentansprüche

1. Reifenprofil (1) für einen Reifen, wobei dieses Reifenprofil eine Verschleiß-Nutzungsgrenze hat, die von mindestens einer Verschleißanzeige (8) angezeigt wird und mindestens zwei allgemein umfänglich ausgerichtete Rillen (2, 3) umfasst, die Übergangsteile (4) und Randteile (5) begrenzen, wobei diese Randteile (5) das Reifenprofil (1) axial begrenzen, wobei diese allgemein umfänglich ausgerichteten Rillen gebildet sind, um mindestens bis zum Erreichen der Nutzungsgrenze des Profils vorhanden zu sein, wobei dieses Reifenprofil eine Lauffläche (10) im Neuzustand umfasst, wobei diese Lauffläche ein äußeres transversales Profil (7) hat, das als Schnittpunkt der Lauffläche mit einer Ebene erhalten wird, welche die Rotationsachse des Reifens enthält, wobei dieses transversale Profil eine Reduzierung der zu verschleißenden Materialstärke auf den Randteilen (5) des Reifenprofils bewirkt, wobei dieses Reifenprofil (1) mindestens eine Grenz-Verschleißanzeige (8) umfasst, die in einer Umfangsrille (2, 3) ausgebildet ist, um die Nutzungsgrenze dieses Profils anzuzeigen, wobei dieses Profil auf seinen Randbereichen (5) eine Vielzahl von Ausschnitten (6) umfasst, die allgemein transversal ausgerichtet sind und sich auf einem seitlichen Teil des Reifenprofils öffnen, wobei jeder transversale Ausschnitt eine geeignete Tiefe hat, um bis zum Grenzverschleiß des Profils vorhanden zu sein, wobei jeder allgemein transversal ausgerichtete Ausschnitt (6) von einem ersten Teil (61) gebildet ist, der sich auf der Lauffläche (10) im Neuzustand öffnet, wobei dieser erste Teil (61) eine mittlere Breite hat und nach innerhalb des Profils durch einen hohlen Teil verlängert wird, der einen Kanal (63) mittlerer Breite bildet, die größer als die mittlere Breite des ersten Teils (61) ist, wobei dieser Kanal (63) zum Bilden einer neuen transversalen Rille nach einem vorher festgelegten teilweisen Verschleiß bestimmt ist, wobei dieses Reifenprofil **dadurch gekennzeichnet ist, dass** der Querschnitt jedes Kanals (63), wobei dieser Querschnitt, der zwischen dem Boden dieses Kanals (63) und mindestens einer Höhe, die gleich der Höhe der Grenz-Verschleißanzeige (8) ist, ermittelt wird, zunimmt, wenn der Ausschnitt (6) axial von innerhalb des Profils nach außerhalb des Profils durchquert wird.

2. Reifenprofil (1) für einen Reifen nach Anspruch 1, **dadurch gekennzeichnet, dass** der von einem ersten Teil (61) gebildete, von einem Kanal (63) verlängerte Ausschnitt (6) einen Gesamtquerschnitt im Neuzustand hat, der über die gesamte Länge des Ausschnitts (6) konstant ist.

3. Reifenprofil (1) für einen Reifen nach Anspruch 1, **dadurch gekennzeichnet, dass** der von einem ersten Teil (61) gebildete, von einem Kanal (63) verlängerte Ausschnitt (6) einen Gesamtquerschnitt im Neuzustand hat, der zunimmt, wenn der Ausschnitt (6) axial von innerhalb des Profils nach außerhalb des Profils durchquert wird.

4. Reifenprofil für einen Reifen nach einem der Ansprüche 1 bis 3, **dadurch gekennzeichnet, dass** die maximale Tiefe jedes auf den Randbereichen (5) gebildeten Ausschnitts (6) gleich der maximalen Tiefe der allgemein umfänglich ausgerichteten Rillen (2, 3) ist.

5. Reifenprofil für einen Reifen nach einem der Ansprüche 1 bis 4, **dadurch gekennzeichnet, dass** der erste Teil (61) jedes auf den Randbereichen (5) gebildeten transversalen Ausschnitts (6) von einem Einschnitt gebildet ist, dessen Wände, die ihn begrenzen, imstande sind, beim Übergang in den Kontakt gegeneinander in Kontakt zu kommen.

6. Reifenprofil für einen Reifen nach einem der Ansprüche 1 bis 5, **dadurch gekennzeichnet, dass** jeder auf den Randbereichen (5) gebildete transversale Ausschnitt (6) einen Übergangsteil (62) umfasst, der einen schrittweisen Anschluss zwischen dem ersten Teil (61), der sich auf der Lauffläche (10) im Neuzustand öffnet, und dem Kanal (63), der sich zum Inneren dieses ersten Teils (61) verlängert, sichert.

7. Reifenprofil für einen Reifen nach einem der Ansprüche 1 bis 6, **dadurch gekennzeichnet, dass** sich die auf den Randbereichen (5) gebildeten transversalen Ausschnitte (6) in eine Umfangsrille (2, 3) öffnen.

## Claims

1. Tread (1) for a tyre, this tread having a tread wear limit signalled by at least one tread wear indicator and comprising at least two grooves (2, 3) of circumferential overall orientation delimiting intermediate parts (4) and edge parts (5), these edge parts (5) axially delimiting the tread (1), these grooves of circumferential overall orientation being formed so as to be present at least until the tread wear limit is reached, this tread comprising a tread surface (10) when new, this tread surface having an external transverse profile (7) obtained as the intersection of the tread surface with a plane containing the axis of rotation of the tyre, this transverse profile generating a reduction in the thickness of wearable material on the edge parts (5) of the tread, this tread comprising at least one tread wear indicator formed in a circumferential groove (2, 3) to indicate the tread wear limit for this tread during running, this tread comprising on its edge regions (5) a plurality of cuts (6) of transverse overall orientation and opening onto a lateral part of the tread, each transverse cut having a depth suited to being present down to the tread wear limit, each cut (6) of transverse overall orientation being formed of a first part (61) opening onto the tread surface (10) when new, this first part (61) having a mean width and being extended towards the inside of the tread by a void part forming a channel (63) of mean width greater than the mean width of the first part (61), this channel (63) being intended to form a new transverse groove after a predetermined amount of part wear, this tread being **characterized in that** the cross section of each channel (63), this cross section being measured between the bottom of this channel (63) and at least a height equal to the height of the tread wear indicator, increases when progressing along the cut (6) axially from the inside of the tread towards the outside of the tread.

2. Tread (1) for a tyre according to Claim 1, **characterized in that** the cut (6) formed by a first part (61) extended by a channel (63) has a total cross section when new which is constant over the entire length of the said cut (6).

3. Tread for a tyre according to Claim 1, **characterized in that** the cut (6) formed by a first part (61) extended by a channel (63) has a total cross section when new which increases when progressing along the cut (6) axially from the inside of the tread towards the outside of the tread.

4. Tread for a tyre according to any one of Claims 1 to 3, **characterized in that** the maximum depth of each cut (6) formed on the edge regions (5) is equal to the maximum depth of the grooves (2, 3) of circumferential overall orientation.

5. Tread for a tyre according to any one of Claims 1 to 4, **characterized in that** the first part (61) of each transverse cut (6) formed on the edge regions (5) is formed by a sipe of which the delimiting walls are able to come into contact with one another as they enter the contact patch.

6. Tread for a tyre according to any one of Claims 1 to 5, **characterized in that** each transverse cut (6) formed on the edge regions (5) comprises an intermediate part (62) making a progressive connection between the first part (61) that opens onto the tread surface (10) when new, and the channel (63) that extends this first part (61) inwards.

7. Tread for a tyre according to any one of Claims 1 to 6, **characterized in that** the transverse cuts (6) formed on the edge regions (5) open into a circumferential groove (2, 3).
